# EUROPEAN PATENT APPLICATION

(11) **EP 4 733 573 A1**
(43) Date of publication of application: **29.04.2026**
(21) Application number: 23942339.5
(22) Date of filing: 21.06.2023
(51) Int. Cl.: F03B 15/04

(54) **CONTROL METHOD FOR PUMPED-STORAGE GENERATION DEVICE**

(71) Applicant: Hitachi Mitsubishi Hydro Corporation, Tokyo 108-0014 (JP)
(72) Inventor: YOSHIDA, Masahiro, Tokyo 108-0014 (JP); SUGAI, Hiroshi, Tokyo 108-0014 (JP)
(74) Representative: Meissner Bolte Partnerschaft mbB
(86) International application number: PCT/JP2023/022925
(87) International publication number: WO 2024/261902

(57) **Abstract**

In a two-stage linear guide vane closing rate having one bend point in a middle of the closing rate from an opening of the guide vane at a time of stop operation to full-close in a method of stopping pumping of a pumped storage power generation apparatus, an opening at the bend point or the guide vane closing rate after the bending point is configured to be adjustable according to the opening of the guide vane at the disconnection of the parallel circuit breaker to make it possible to adjust rotational speeds of a runner of the pump turbine and a rotor of a generator motor at the time of full-close of the guide vane not to change much, to shorten the transition time from the switching operation from the pumping operation to the power generation operation to the power generation operation for the pumped storage power generation apparatus, and to make a difference amount of the transition time from the pumping operation to the power generation operation caused by a difference of the opening of the guide vane or the rotational speeds of the runner of the pump turbine and the rotor of the generator motor at the disconnection of the parallel circuit breaker small.

## Description

### Field

The present invention relates to control for rapidly switching from a pumping operation to a power generation operation of a constant-speed or variable-speed pumped storage power generation apparatus, and related to a method of controlling rapidly switching the pumped storage power generation apparatus from the pumping operation to the power generation operation, in which when the parallel circuit breaker is immediately disconnected to shift to input shutoff when a switching command from the pumping operation to the power generation operation is issued, in a two-stage linear guide vane closing rate having one bend point in the middle of a closing rate from an opening of the guide vane at the time of stop operation to full-close, an opening at the bend point is configured to be adjustable according to the opening of the guide vane at the disconnection of the parallel circuit breaker to make it possible to adjust the opening at the bend point to be less as the opening of the guide vane at the disconnection of the parallel circuit breaker larger to adjust rotational speeds of a runner of the pump turbine and a rotor of the generator motor at the time of full-close of the guide vane not to change much even when the opening of the guide vane at the disconnection of the parallel circuit breaker largely differs for the pumped storage power generation apparatus of either of constant-speed or variable-speed, to shorten the time from the switching command from the pumping operation to the power generation operation is issued to the time when the rotation of the rotating body is stopped to enable start of power generation, and to make a difference amount of the time depending on the opening of the guide vane at the disconnection of the parallel circuit breaker small.

### Background

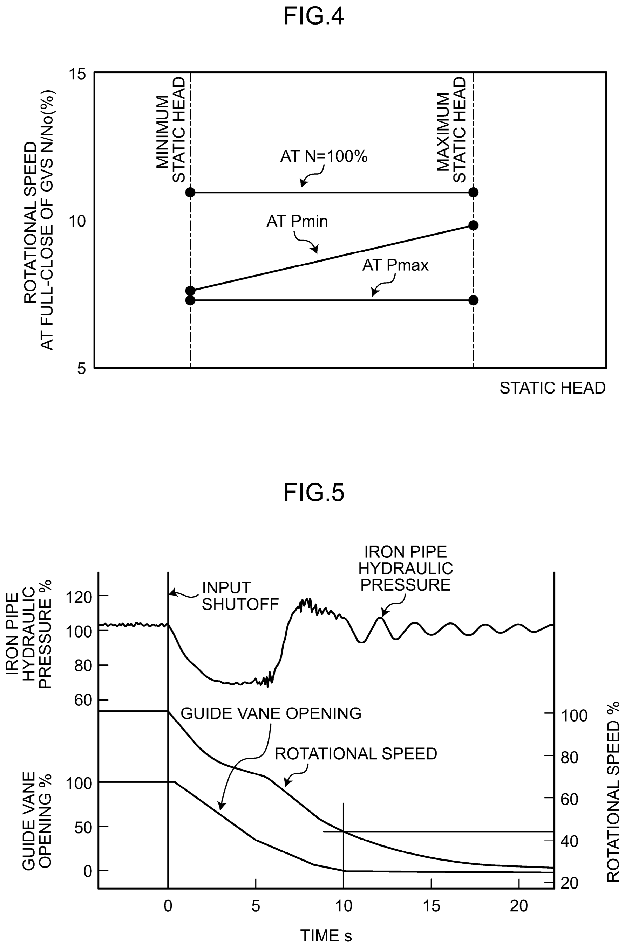

A pump turbine of a pumped storage power generation apparatus includes: a runner connected to a main shaft rotating in a runner chamber vertically sandwiched between an upper cover and a lower cover; a plurality of movable guide vanes provided on an outer peripheral portion of the runner chamber to adjust a flow rate of water flowing in and out from the runner chamber; an inlet valve for adjusting a flow direction by a speed ring having a plurality of stationary stay vanes on an outer peripheral side of the movable guide vanes to cause water to flow between a casing provided on an outermost peripheral side of the pump turbine and the runner and to close a flow path for causing water to flow in and out from the casing; a lower suction pipe provided in a lower portion of the runner chamber to guide a water flow flowing in and out from the runner chamber to a lower water reservoir of a pumped storage power generation station; and a power generator motor connected to the main shaft. In a method of controlling the conventional pumped storage power generation apparatus when the pumped storage power generation apparatus is stopped during pumping operation, a linear guide vane closing rate or a two-stage linear guide vane closing rate having a single fixed bend point opening in the middle is applied to a closing rate from a guide vane opening at the time of stop operation to full-close. Therefore, when a switching command from the pumping operation to the power generation operation is issued, the parallel circuit breaker is disconnected to transition to input shutoff, and the rotational speeds of the runner of the pump turbine and the rotor of the generator motor at the time of full-close of the guide vanes greatly vary due to a difference in the guide vane opening at the time of disconnection of the parallel circuit breaker or the rotational speed of the runner of the pump turbine and the rotor of the generator motor at the time of disconnection, and the time from when the parallel circuit breaker is disconnected to when the rotation of the runner of the pump turbine and the rotor of the generator motor stops greatly varies depending on the operation condition difference at the time of disconnection. As an example of transient phenomenon upon the pump input shutoff of the pumped storage power generation apparatus, FIG. 5 illustrates an example of transient phenomenon upon the pump input shutoff of FIG. 129 illustrated in the Japan Society of Mechanical Engineers, Mechanical Engineers' Handbook B, Applied edition B5 Applied edition 2.9.3 Transient Phenomenon. In the example of the pump input shutoff transient phenomenon illustrated in FIG. 5, the guide vanes are closed according to a two-stage linear guide vane closing rate having one bend point at a small opening in the middle of the closing rate from the guide vane opening at the time of input shutoff to the full-close, and the bend point opening is constant regardless of the total head at the time of input shutoff and other conditions of the guide vane opening. Therefore, the rotational speeds of the runner of the pump turbine and the rotor of the generator motor when the guide vanes are fully closed are as large as 40% or more.

The rotational speeds of the runner and the rotor of the generator motor are decelerated mainly by sliding friction resistance caused by the runner stirring water confined in the runner chamber by fully closing the guide vanes, and it takes a long time to decelerate to some extent and then stop the rotation by the electric brake and the mechanical brake operation on the generator motor side.

Examples of a method of controlling rapidly switching the pumped storage power generation apparatus from the pumping operation to the power generation operation include a method using a hydraulic brake that does not completely close guide vanes and causes a highpressure water flow in a direction opposite to a rotation direction to act on a runner illustrated in FIG. 5 in Hydroelectric Power Technologies Contributing to Power System Quality Improvement in Toshiba Review Vol. 58 No. 7 (2003), and it has been verified by test results in a model pump turbine that high-speed switching from rotation in the pumping direction to rotation in the waterwheel direction is possible. However, in an actual pumped storage power generation apparatus, the tilt reversal of the tilting pad of the thrust bearing upon rapid reversal of the rotation direction does not always normally operate against the inertial flow of the lubricating oil in the oil reservoir, and thus there is a concern that the thrust bearing may be damaged.

As described above, FIG. 5 illustrates an example of transient phenomenon upon the pump input shutoff of FIG. 129 illustrated in the Japan Society of Mechanical Engineers, Mechanical Engineers' Handbook B, Applied edition B5 Applied edition 2.9.3 Transient Phenomenon. FIG. 5 is an example of a pump input shutoff transient phenomenon of a constant-speed pumped storage power generation apparatus, and the indicated rotational speed at the time of full-close of the guide vane opening is about 44% of the rated rotational speed.

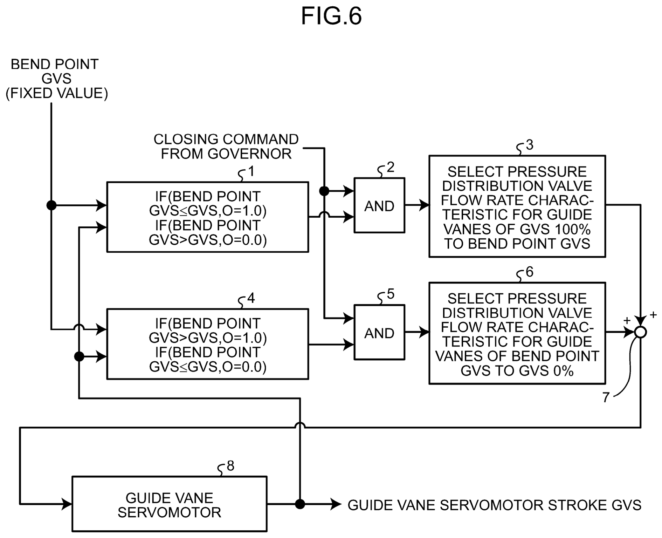

FIG. 6 illustrates a configuration diagram of a guide vane servomotor closing circuit at the time of input shutoff of a conventional pumped storage power generation apparatus.

Reference numeral 1 denotes a logic function circuit, and the logic function circuit 1 determines whether a guide vane servomotor stroke (hereinafter, may be abbreviated as GVS) value is equal to or more than a bend point GVS at the time of input shutoff or is less than the bend point GVS, and outputs 1.0 when the GVS value is equal to or more than the bend point GVS, and outputs 0.0 when the GVS value is less than the bend point GVS.

Reference numeral 2 denotes a logic AND unit, and the logic AND unit 2 calculates logic AND of the output of the logic function circuit 1 and a closing command from the governor and outputs the result.

Reference numeral 3 denotes a selection function circuit, and the selection function circuit 3 selects and outputs a pressure distribution valve flow rate characteristic for guide vanes of GVS 100% to the bend point GVS when the output signal of the logic AND unit 2 is 1.0.

Reference numeral 4 denotes a logic function circuit, and the logic function circuit 4 determines whether the GVS value is less than the bend point GVS or equal to or more than the bend point GVS at the time of input shutoff, outputs 1.0 when the GVS value is less than the bend point GVS, and outputs 0.0 when the GVS value is equal to or more than the bend point GVS.

Reference numeral 5 denotes a logic AND unit, and the logic AND unit 5 calculates logical AND of the output of the logic function circuit 4 and a closing command from the governor and outputs the result.

Reference numeral 6 denotes a selection function circuit, and the selection function circuit 6 selects and outputs the pressure distribution valve flow rate characteristic for guide vanes of the bend point GVS to GVS 0% when the output signal of the logic AND unit 5 is 1.0.

Reference numeral 7 denotes an adder, and the adder 7 adds the pressure distribution valve flow rate characteristic for guide vanes of GVS 100% to the bend point GVS selected by the selection function circuit 3 and the pressure distribution valve flow rate characteristic for guide vanes of the bend point GVS to GVS 0% selected by the selection function circuit 6 and outputs the result.

Reference numeral 8 denotes a guide vane servomotor, and the GVS is closed according to the pressure distribution valve flow rate characteristic for guide vanes output from the adder 7.

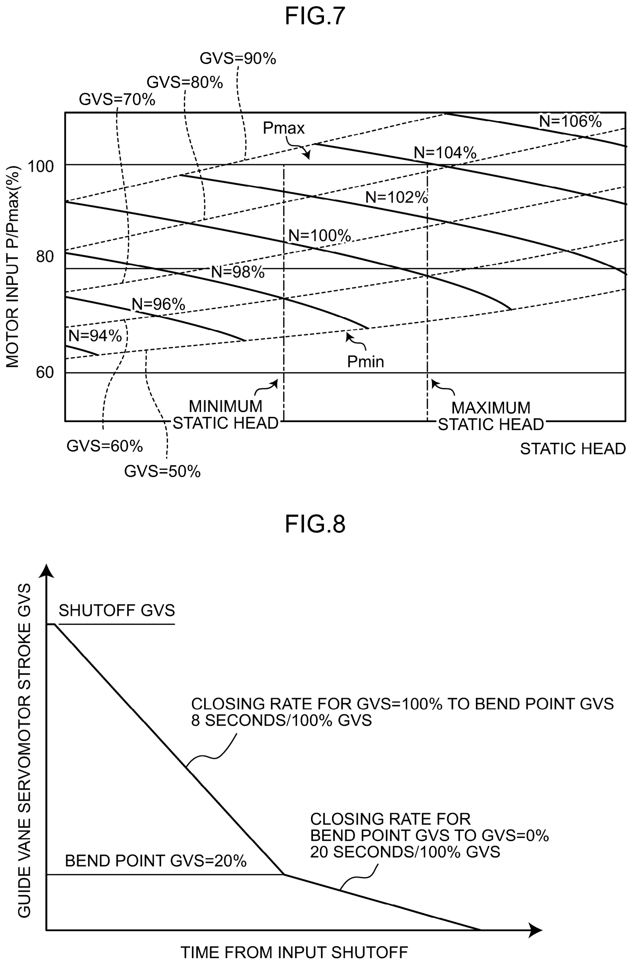

FIG. 7 is a characteristic diagram example of a pumping operation range of a variable-speed pumped storage power generation apparatus.

In FIG. 7, in the variable-speed pumping operation range, a rotational speed N changes from about 97% to 104% of the rated rotational speed Nₒ, the GVS changes from 50% to at most about 88%, and a motor input P changes in a range of at least about 65% to 100% with respect to the maximum motor input Pmax.

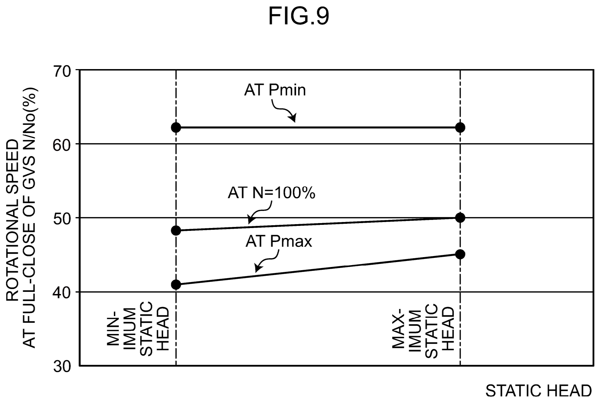

FIG. 8 is a closing characteristic diagram of the guide vane servomotor stroke upon input shutoff of the conventional pumped storage power generation apparatus. The closing characteristic of the guide vane servomotor stroke upon input shutoff has one step of bend point between the shutoff GVS and GVS 0%, the guide vane is closed at 8 seconds/100% GVS from the shutoff GVS to the bend point GVS, the bend point GVS is 20%, and the guide vane is closed at 20 seconds/100% GVS from the bend point GVS to GVS 0%. As illustrated in FIG. 9 to be described below, the closing characteristic is set to secure the rotational speed in the pumping direction when the GVS 0% is reached to be at least 30% or more in order to prevent the occurrence of damage to the thrust bearing due to the tilt reversal of the tilting pad of the thrust bearing not normally operating when the rotation of the runner during the GVS closing is reversed from the pumping operation direction to the power generation operation direction.

FIG. 9 is a diagram illustrating an example of a rotational speed analysis result when a guide vane servomotor stroke is full-close in an input shutoff analysis example of the conventional pumped storage power generation apparatus.

For the analysis result example, the closing characteristic of the guide vane servomotor stroke upon input shutoff in FIG. 8 is used and the input shutoff analysis is performed for the maximum motor input Pmax, the rotational speed N = 100%, and the minimum motor input Pmin of GVS = 50%, at the minimum static head and the maximum static head in the characteristic diagram of the pumping operation range of the variable-speed pumped storage power generation apparatus illustrated in FIG. 7.

In the analysis result example, the rotational speed analysis result at the time of full-close of the GVS is in a range of about 41% to about 45% at the maximum motor input Pmax, in a range of about 48.5% to about 50% at the rotational speed N = 100%, and is constant at about 63% at the minimum motor input Pmin. Therefore, the minimum value of the rotational speed analysis result at the time of GVS full-close is about 41% at the time of the maximum motor input Pmax at the minimum static head, and the rotational speed in the pumping direction at the time of reaching GVS 0% for preventing the reverse of the rotation of the runner from the pumping operation direction to the power generation operation direction during the GVS closing satisfies at least 30% or more.

### Citation List

### Patent Literature

Patent Literature 1: Japanese Patent Application Laid-Open No. H4-159457

### Summary of Invention

### Problem to be solved by the Invention

In the conventional method of rapidly switching the pumped storage power generation apparatus from the pumping operation to the power generation operation, when the switching command from the pumping operation to the power generation operation is issued, the parallel circuit breaker is immediately disconnected to transition to the input shutoff. However, as illustrated in FIGS. 5 and 9, in order to prevent the rotation of the runner from being reversed from the pumping operation direction to the power generation operation direction during the GVS closing, the rotational speed in the pumping direction when the GVS reaches 0% is secured to be at least 30% or more, and practically, at least 40% or more as the minimum value. However, since the rotational speed at the time of reaching GVS 0% is secured to be 40% or more as the minimum value, even if the electric brake and the mechanical brake are operated, it takes a long time to stop the rotation, and since the power generation start is after the complete stop of the rotation is detected, it takes about 5 minutes or more to switch from the pumping operation to the power generation operation, and thus, it is difficult to start power generation earlier.

A control method proposed as one means for solving the above situation is proposed in Patent Literature 1. This is a method of controlling a pump turbine when transitioning to a power generation operation from a pumping operation according to a switching command during the pumping operation, in which after the generator motor in the pumping operation state is disconnected from the system, the guide vane opening is held at a small opening, the rotational speed of the pump turbine in the pumping direction is rapidly reduced, and after the rotational speed of the pump turbine is reversed into the power generation direction, the pumped storage power generation apparatus is transitioned to the power generation operation.

As a result of verification of an effect of application of the method of controlling a pump turbine when transitioning to a power generation operation from a pumping operation according to a switching command described in Patent Literature 1, FIG. 5 in Hydroelectric Power Technologies Contributing to Power System Quality Improvement in Toshiba Review Vol. 58 No. 7 (2003) shows that a total switching time can be shortened to about 1/2 of that in the conventional method as a verification result by a model test device.

However, when the switching from the pumping operation to the power generation operation described in Patent Literature 1 is applied, as described above, the tilt of the tilting pad of the thrust bearing upon rapid reversal of the rotation direction is not always changed against the inertial flow of the lubricating oil in the oil reservoir, and thus there is a concern that the thrust bearing may be damaged. As a result, it is considered to be an issue that the operation of the pumped storage power generation apparatus is disrupted after the thrust bearing is damaged.

### Means to Solve the Problem

In order to solve the above issues, in the present invention, one step of bend point GVS between the shutoff GVS and GVS 0% of the closing characteristics of a guide vane servomotor stroke upon input shutoff after a switching command from a pumping operation to a power generation operation is adjustable according to a GVS value at the time of occurrence of input shutoff to make a difference in a runner rotational speed of a pump turbine at the time of GVS full-close due to a difference in an operation point at the time of occurrence of input shutoff small, to make a runner rotational speed maximum value of the pump turbine at the time of GVS full-close about 10% or less of the rated rotational speed, and to make time until rotation stop short and make variations in time until rotation stop due to a difference in an operation point at the time of occurrence of input shutoff small.

### Effects of the Invention

According to the present invention, when a switching command from a pumping operation to a power generation operation of a pumped storage power generation apparatus including: a pump turbine including a movable guide vane; and a generator motor axially coupled to the pump turbine is issued, it is possible to shorten a time until rotation stop and reduce variations in time until rotation stop due to a difference in an operation point at the time of occurrence of input shutoff.

### Brief Description of Drawings

FIG. 1 is a configuration diagram of a guide vane servomotor closing circuit at the time of input shutoff after a switching command from a pumping operation to a power generation operation of a pumped storage power generation apparatus according to an embodiment of the present invention.
FIG. 2 is a closing characteristic diagram of the guide vane servomotor stroke upon input shutoff after the switching command from the pumping operation to the power generation operation of the pumped storage power generation apparatus according to the embodiment of the present invention.
FIG. 3 is a diagram illustrating an example of bend point GVS setting in the closing characteristic of the guide vane servomotor stroke upon input shutoff after the switching command from the pumping operation to the power generation operation of the pumped storage power generation apparatus according to the embodiment of the present invention.
FIG. 4 is a diagram illustrating an example of a rotational speed analysis result when the guide vane servomotor stroke is full-close in the input shutoff analysis example after the switching command from the pumping operation to the power generation operation of the pumped storage power generation apparatus according to the embodiment of the present invention.
FIG. 5 is a diagram illustrating an example of a transient phenomenon at the time of input shutoff of the pumped storage power generation apparatus according to the conventional example.
FIG. 6 is a configuration diagram of a guide vane servomotor closing circuit at the time of input shutoff of a conventional pumped storage power generation apparatus.
FIG. 7 is a characteristic diagram example of a pumping operation range of a variable-speed pumped storage power generation apparatus.
FIG. 8 is a closing characteristic diagram of the guide vane servomotor stroke upon input shutoff of the conventional pumped storage power generation apparatus.
FIG. 9 is a diagram illustrating an example of a rotational speed analysis result when the guide vane servomotor stroke is full-close in an input shutoff analysis example of the conventional pumped storage power generation apparatus.

### Description of Embodiments

Hereinafter, a method of controlling a pumped storage power generation apparatus according to the present invention, more specifically, a method of controlling switching from a pumping operation to a power generation operation of the pumped storage power generation apparatus will be described in detail with reference to the drawings. Note that the present invention is not limited by the embodiments.

### [Embodiment]

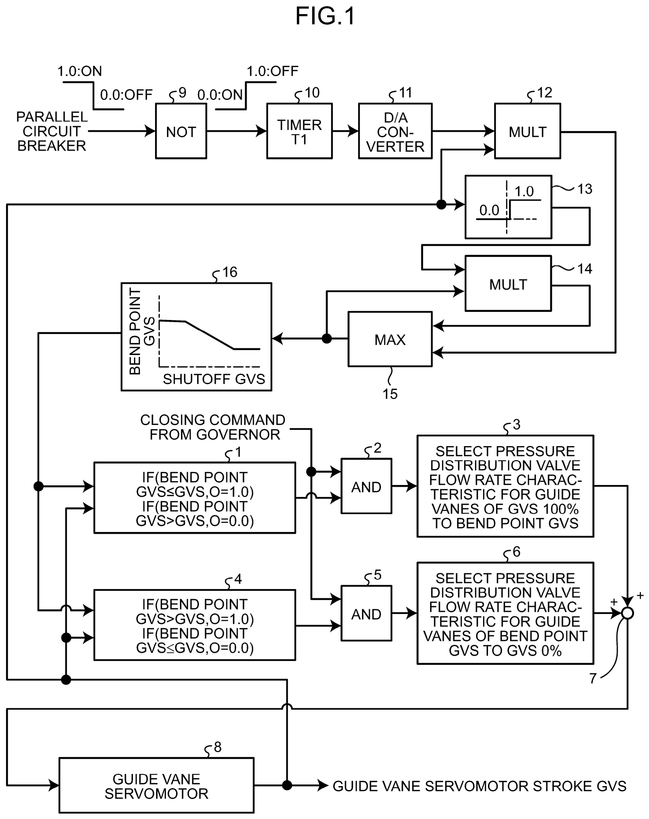

FIG. 1 is a configuration diagram of a guide vane servomotor closing circuit at the time of input shutoff after a switching command from a pumping operation to a power generation operation of a pumped storage power generation apparatus according to an embodiment of the present invention. In FIG. 1, the same reference numerals as those in FIG. 6 used to describe the conventional example indicate the same components or corresponding components.

The configuration in FIG. 1 is substantially the same as the configuration of the conventional pumped storage power generation apparatus illustrated in FIG. 6, but the configuration in FIG. 1 is added with a circuit that allows adjustment, according to the GVS value at the time of occurrence of input shutoff described below, of one step bend point provided between the shutoff GVS and GVS 0% in the closing characteristic of the guide vane servomotor stroke upon input shutoff.

Reference numeral 9 denotes a NOT function circuit. An ON/OFF signal of a parallel circuit breaker is input to the NOT function circuit 9, and the NOT function circuit 9 outputs 0.0 when the parallel circuit breaker is ON and outputs 1.0 when the parallel circuit breaker is OFF.

A reference numeral 10 denotes a timer. The output of the NOT function circuit 9 is input to the timer 10, and when the input is 1.0, the timer 10 outputs 1.0 during timer set time T1. When the input is other than 1.0, the timer 10 always outputs 0.0. The timer set time T1 is equal to or less than the GVS closing dead time immediately after occurrence of input shutoff.

Reference numeral 11 denotes a digital-to-analog converter. The digital-to-analog converter 11 converts a digital value output from the timer 10 into an analog value and outputs the analog value.

A reference numeral 12 denotes a multiplier. The multiplier 12 outputs a result obtained by multiplying GVS, which is the output of a guide vane servomotor 8, by the output value of the digital-to-analog converter 11. Therefore, the multiplier 12 outputs the GVS value during the timer set time T1 of the timer 10 after the parallel circuit breaker is turned off.

Reference numeral 13 denotes an ON/OFF signal generator. The ON/OFF signal generator 13 outputs 1.0 when the GVS value, which is the output of the guide vane servomotor 8, is a few percent or more, and outputs 0.0 when the GVS value is equal to or less than a few percent.

A reference numeral 14 denotes a multiplier. The multiplier 14 outputs a result obtained by multiplying the output of the ON/OFF signal generator 13 by the output of a maximum value selection function circuit 15 described below.

Reference numeral 15 denotes a maximum value selection function circuit. The maximum value selection function circuit 15 compares the output value of the multiplier 12 with the output value of the multiplier 14, and outputs the maximum value. By the functions described above from the NOT function circuit 9 to the maximum value selection function circuit 15, the GVS value at the time of occurrence of input shutoff is output from the multiplier 12 during the timer set time T1 of the timer 10, and 1.0 is output from the ON/OFF signal generator 13 when the GVS value is a few percent or more. Therefore, when the GVS value is a few percent or more, the GVS value at the time of occurrence of input shutoff is self-held by the multiplier 14 and the maximum value selection function circuit 15.

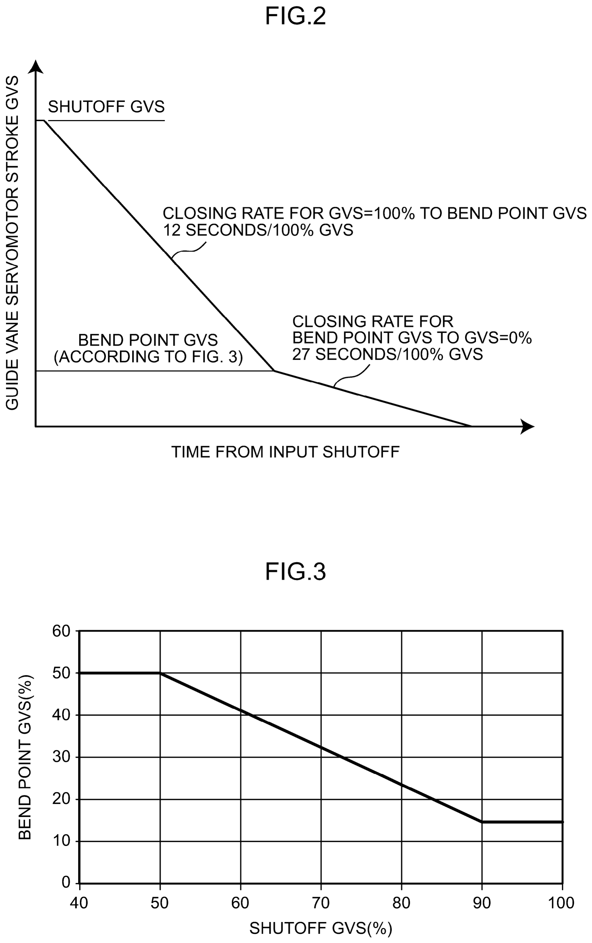

Reference numeral 16 denotes a bend point GVS generation function circuit. A setting example of the bend point GVS generation function circuit 16 is illustrated in FIG. 3 described below.

FIG. 2 is a closing characteristic diagram of the guide vane servomotor stroke upon input shutoff after the switching command from the pumping operation to the power generation operation of the pumped storage power generation apparatus according to the embodiment of the present invention. The closing characteristic of the guide vane servomotor stroke upon input shutoff has one step of bend point between the shutoff GVS and GVS 0%, and the guide vanes are closed at 12 seconds/100% GVS from the shutoff GVS to the bend point GVS, an example of setting the bend point GVS is illustrated in FIG. 3 described below, and the guide vanes are closed at 27 seconds/100% GVS from the bend point GVS to GVS 0%.

FIG. 3 is a diagram illustrating an example of bend point GVS setting in the closing characteristic of the guide vane servomotor stroke upon input shutoff after the switching command from the pumping operation to the power generation operation of the pumped storage power generation apparatus according to the embodiment of the present invention. In the present embodiment, when the shutoff GVS is 50% or less, the bend point GVS is always 50%, when the shutoff GVS is in a range of 50% or more and 90% or less, the bend point GVS is linearly reduced from 50% to 15%, and when the shutoff GVS is 90% or more, the bend point GVS is always 15%. By applying the bend point GVS setting in the closing characteristic of the guide vane servomotor stroke upon input shutoff after the switching command from the pumping operation to the power generation operation in FIG. 3 to the closing characteristic of the guide vane servomotor stroke upon input shutoff after the switching command from the pumping operation to the power generation operation in the pumped storage power generation apparatus in FIG. 2, the GVS maximum closing time, in a case where the shutoff GVS is 100%, which is maximum, is 19.5 seconds.

FIG. 4 is a diagram illustrating an example of a rotational speed analysis result when the guide vane servomotor stroke is full-close in the input shutoff analysis example after the switching command from a pumping operation to a power generation operation of a pumped storage power generation apparatus according to the embodiment of the present invention.

For the analysis result example, the bend point GVS settings in the closing characteristic of the guide vane servomotor stroke upon input shutoff after the switching command from the pumping operation to the power generation operation in FIG. 2 and the closing characteristic of the guide vane servomotor stroke upon input shutoff after the switching command from the pumping operation to the power generation operation in FIG. 3 are used, and the input shutoff analysis is performed for the time of the maximum motor input Pmax, for the rotational speed N = 100%, and for the minimum motor input Pmin of GVS = 50%, at the minimum static head and the maximum static head in the characteristic diagram of the pumping operation range of the variable-speed pumped storage power generation apparatus illustrated in FIG. 7, similarly to FIG. 9.

In the analysis result example, the rotational speed analysis result at the time of full-close of the GVS is in a range of 7.1% to 7.4% at the maximum motor input Pmax, is constant at about 11% at the rotational speed N = 100%, and is in a range from 7.7% to 9.8% at the minimum motor input. Thus, the difference in the rotational speed at the time of full-close of the GVS is less than 5% even when the shutoff GVS differs by 10% or more. As a result, the rotational speed analysis result at the time of full-close of the GVS in this analysis result example is in the range of 7.1% to 11%, indicating that the maximum value is small to be about 1/6 and the change width is also small to be 2.1%, as compared with the range of about 41% to about 63% in the rotational speed analysis result at the time of full-close of the GVS in the analysis result example of the conventional method illustrated in FIG. 9.

Therefore, by using, for the guide vane servomotor closing circuit at the time of input shutoff after the command for switching from the pumping operation to the power generation operation of the pumped storage power generation apparatus configured as illustrated in FIG. 1, the closing characteristic of the guide vane servomotor stroke upon input shutoff after the switching command from the pumping operation to the power generation operation in FIG. 2 and the bend point GVS setting in the closing characteristic of the guide vane servomotor stroke upon input shutoff after the switching command from the pumping operation to the power generation operation in FIG. 3, the GVS maximum closing time is 19.5 seconds or less and the rotational speed at the time of GVS full-close is about 11% or less as described above, so that it is expected that the time from the occurrence of input shutoff until the rotation is stopped by the electric brake and the mechanical brake operation is 30 seconds or less.

In addition, even in a case where the rapid switching from the pumping operation to the power generation operation of the constant-speed or variable-speed pumped storage power generation apparatus is not performed, it is possible to reduce the difference in the rotational speed of the runner of the pump turbine at the time of full-close of the GVS due to the difference in the operation point at the time of occurrence of the input shutoff and to accelerate the restart to the pumping operation or the power generation operation including the phase modification operation by adjusting the closing rate of the closing characteristic of the guide vane servomotor stroke upon input shutoff after the switching command from the pumping operation to the power generation operation in FIG. 2, and adjusting the bend point GVS setting in the closing characteristic of the guide vane servomotor stroke upon input shutoff after the switching command from the pumping operation to the power generation operation in FIG. 3 and applying the adjusted bend point GVS setting to the emergency stop and the input shutoff.

### Reference Signs List

1, 4 LOGIC FUNCTION CIRCUIT; 2, 5 LOGIC AND UNIT; 3, 6 SELECTION FUNCTION CIRCUIT; 7 ADDER; 8 GUIDE VANE SERVOMOTOR; 9 NOT FUNCTION CIRCUIT; 10 TIMER; 11 DIGITAL-TO-ANALOG CONVERTER; 12, 14 MULTIPLIER; 13 ON/OFF SIGNAL GENERATOR; 15 MAXIMUM VALUE SELECTION FUNCTION CIRCUIT; 16 BEND POINT GUIDE VANE SERVOMOTOR STROKE GENERATION FUNCTION CIRCUIT.

## Claims

1. A method of controlling switching from a pumping operation to a power generation operation of a pumped storage power generation apparatus, wherein
when a switching command from the pumping operation to the power generation operation of the pumped storage power generation apparatus including: a pump turbine including a movable guide vane; and a generator motor axially coupled to the pump turbine is issued,
the pumping operation is switched to the power generation operation by disconnecting a parallel circuit breaker to shift to input shutoff immediately when the switching command from the pumping operation to the power generation operation is issued, and setting an opening at one bend point in a two-stage linear guide vane closing rate having the bend point in a middle of the closing rate from an opening of the guide vane at a time of stop operation to full-close to be adjustable according to the opening of the guide vane at the disconnection of the parallel circuit breaker to make it possible to adjust the opening at the bend point to be less as the opening of the guide vane at the disconnection of the parallel circuit breaker larger to adjust rotational speeds of a runner of the pump turbine and a rotor of the generator motor at the time of full-close of the guide vane not to change by 5% or more of a rated rotational speed even when the opening of the guide vane at the disconnection of the parallel circuit breaker differs by 10% or more of a full-open opening for the pumped storage power generation apparatus of either of constant-speed or variable-speed to make a difference amount of time from when the switching command from the pumping operation to the power generation operation is issued to when rotation of a rotating body is stopped to enable start of power generation 5% or less of the rated rotational speed, the difference amount of time depending on the opening of the guide vane at the disconnection.

2. The method of controlling switching from a pumping operation to a power generation operation of a pumped storage power generation apparatus according to claim 1, wherein
upon reception of the switching command from the pumping operation to the power generation operation, the pumping operation is switched to the power generation operation by disconnecting the parallel circuit breaker immediately after the reception of the switching command signal from the pumping operation to the power generation operation, closing the guide vane according to the opening of the guide vane at the disconnection of the parallel circuit breaker or guide vane closing determined according to the rotational speeds of the runner of the pump turbine and the rotor of the generator motor at the disconnection without closing an inlet valve provided between the pump turbine and an iron pipe, and opening, after detection of stop of the rotational speed of a rotating body of the pumped storage power generation apparatus, the guide vane to a power generation starting opening to start power generation, and paralleling the parallel circuit breaker after the rotational speed of the rotating body of the pumped storage power generation apparatus reaches the parallel rotational speed of the parallel circuit breaker.
